# EUROPEAN PATENT APPLICATION

(11) **EP 4 691 774 A1**
(43) Date of publication of application: **11.02.2026**
(21) Application number: 24936194.0
(22) Date of filing: 24.12.2024
(51) Int. Cl.: B32B 33/00, B32B 27/36, B32B 27/18, B32B 27/08, B32B 27/30, B32B 27/06, B29D 7/00, B63B 3/48

(54) **PLASTIC FLOOR FOR SHIP AND PROCESSING METHOD**

(30) Priority: 30.04.2024 CN 202410538338
(71) Applicant: Zhejiang Kingdom New Material Group Co., Ltd., Jiaxing City, Zhejiang 314516 (CN)
(72) Inventor: DAI, Huibin, Jiaxing, Zhejiang 314516 (CN); LI, Mengfei, Jiaxing, Zhejiang 314516 (CN); CHENG, Lei, Jiaxing, Zhejiang 314516 (CN); DONG, Lijie, Jiaxing, Zhejiang 314516 (CN); SHEN, Fei, Jiaxing, Zhejiang 314516 (CN); LUO, Zemin, Jiaxing, Zhejiang 314516 (CN); WU, Li, Jiaxing, Zhejiang 314516 (CN)
(74) Representative: Metida
(86) International application number: PCT/CN2024/141784
(87) International publication number: WO 2025/227778

(57) **Abstract**

The disclosure provides a marine plastic floor, which includes a UV layer, a PETG flame-retardant and wear-resistant layer, a PETG color film layer, a PVC middle layer and a PVC bottom layer from top to bottom. According to the technical scheme provided in the disclosure, by optimizing formulations of materials of the middle layer and the bottom layer in the PVC floor, and changing the wear-resistant layer and the color film, after combining them, the PVC floor has sufficient flame retardancy, low smoke and low toxicity after burning, and can meet requirements of MED certification, so that the PVC floor can be used on marine vessels, and vacancy in the current market that there is no PVC floor as the marine floor is filled.

## Description

### TECHNICAL FIELD

The disclosure relates to the technical field of marine plates, in particular to a marine plastic floor and a processing method thereof.

### BACKGROUND ART

A marine vessel is of a relatively closed environment, and all of its floors must meet Marine Equipment Directive (MED) certification, that is, they should pass a test for surface flammability (IMO FTPC Part 5 Test for surface flammability) and a smoke toxicity test (IMO FTPC Part 2 Smoke and toxicity test). Therefore, products must have sufficient flame retardancy and low smoke and toxicity after burning. Generally, inorganic materials can meet above requirements, but with integrity, comfort and beauty of the floor considered, low-carbon and elastic floor materials are used for marine floors. However, conventional PVC plastic floors can meet requirements in terms of flame retardancy, but are difficult to meet standards in terms of smoke toxicity (among general plastics and engineering plastics used, PVC is one of plastic varieties with largest amount of smoke generated by combustion, and its large amount of HCl produced by combustion poses great threat to personnel), and it is necessary to performed modification researches on them. A Chinese patent application No. 202110516487.9 titled "Environment-friendly flame-retardant cutting device for marine stone plastic floor" presents the same conclusion, but completely avoids a PVC system and adopts a PP/PE system. To sum up, there are only a handful of applicants with a "WheelMark" gear logo recognized by the International Maritime Organization. Therefore, in the disclosure, based on the above background and integrity requirements of the floor (in which locking floors should not be used, but scraping rubber pavement of non-locking floor should be used), and modification researches of non-locking PVC floors should be carried out to meet requirements of MED certification.

### SUMMARY

### 1. Problems to be solved

A technical problem to be solved by the disclosure is to provide a marine plastic floor and a processing method thereof, which solves a problem that conventional PVC floors cannot meet MED certification and cannot be used on marine vessels.

### Solution:

To solve the above problems, the technical scheme provided in the disclosure is as follows.

A marine plastic floor includes a UV layer, a PETG flame-retardant and wear-resistant layer, a PETG color film layer, a PVC middle layer and a PVC bottom layer from top to bottom.

A formulation of the middle layer is as follows: 20 to 25 parts of PVC resin powder, 70 to 80 parts of stone powder, 6 to 10 parts of plasticizer, 0.2 to 0.6 part of stabilizer, 10 to 25 parts of flame retardant, 6 to 9 parts of charring agent, 2 to 5 parts of smoke suppressant, and 0.1 to 0.3 part of carbon black.

A formulation of the bottom layer is as follows: 40 to 60 parts of PVC resin powder, 20 to 40 parts of stone powder, 10 to 15 parts of plasticizer, 0.2 to 0.6 part of stabilizer, 10 to 25 parts of flame retardant, 6 to 9 parts of charring agent, 2 to 5 parts of smoke suppressant, and 0.1 to 0.3 part of carbon black.

Further, the plasticizer is any one of bio-based plasticizer or DOTP.

Further, the stabilizer is any one of calcium-zinc stabilizer or rare earth stabilizer.

Further, the flame retardant is any one of aluminum hydroxide or magnesium hydroxide.

Further, the charring agent is any one of phosphate-based charring agent, boron-based charring agent or silicon-based charring agent.

Further, the smoke suppressant is one of molybdenum-based smoke suppressant, ammonium octamolybdate or molybdenum trioxide or triamine octamolybdate.

Further, an overall thickness of the floor is 2.0 to 3.0 mm.

A thickness of the PETG flame-retardant and wear-resistant layer is 0.07 to 0.5 mm.

The PETG color film layer is non-flame-retardant, with a thickness of 0.07 to 0.1 mm.

A thickness of the PVC middle layer is 0.7 to 2.2 mm.

A thickness of the PVC bottom layer is 0.7 to 1.1 mm.

A processing method of the marine plastic floor is further provide in the disclosure, which specifically includes following steps:
S01, mixing materials;
S02, calendering the materials to prepare a middle layer and a bottom layer;
S03, oil pressing the PETG flame-retardant and wear-resistant layer, the PETG color film layer, the PVC middle layer and the PVC bottom layer to be integrally formed;
S04, coating and tempering to form a UV layer;
S05, performing finishing; and
S06, packaging.

Further, the calendering in the step S02 is with banburying time of 2 to 5 min and a temperature of a calendering roller of 160 to 180°C.

Further, the oil pressing in the step S03 is with a hot pressing pressure of 4 to 8 MPA and hot pressing time of 30 to 40min, and a cold pressing pressure of 9 to 13 MPA and cold pressing time of 25 to 30 min.

### Beneficial effects

Compared with related art, the technical schemes provided in the disclosure have following beneficial effects.

According to the technical scheme provided in the disclosure, by optimizing formulations of materials of the middle layer and the bottom layer in the PVC floor, and changing materials of the wear-resistant layer and the color film, after combining them, the PVC floor has sufficient flame retardancy, low smoke and low toxicity after burning, and can meet the requirements of MED certification, so that the PVC floor can be used on marine vessels, and vacancy in the current market that there is no PVC floor as the marine floor is filled.

### BRIEF DESCRIPTION OF THE DRAWINGS

FIG. 1 is a schematic structural view of a marine plastic floor proposed in an embodiment of the present disclosure; and
FIG. 2 is a flowchart of a processing method of the marine plastic floor proposed in an embodiment of the disclosure.

### DETAILED DESCRIPTION

In order to further understand contents of the present disclosure, the present disclosure will be described in detail with reference to drawings and examples.

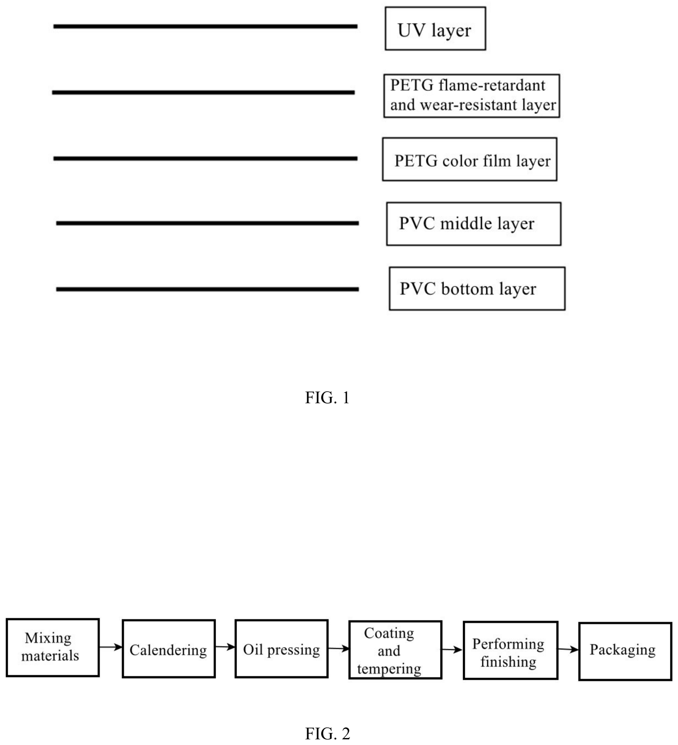

Referring to FIGS. 1 and 2, a marine plastic floor is composed of multiple layers of materials, which is composed of a UV layer, a PETG flame-retardant and wear-resistant layer, a PETG color film layer, a PVC middle layer and a PVC bottom layer from top to bottom.

Regarding the surface wear-resistant layer, a conventional wear-resistant layer is replaced by the PETG flame-retardant wear-resistant layer, which, on one hand, can ensure to pass the test for surface flammability and on the other hand reduces release of HCL gas as much as possible.

A PETG color film is selected as a color film, which not only provides an ornamental value of products, but also reduces the release of HCL gas as much as possible.

The flame retardant, the charring agent and the smoke suppressant are added in the PVC middle layer and the PVC bottom layer respectively, which makes prepared materials have flame retardancy and low smoke, improves the flame retardancy of the products and reduces generation of toxic gases.

A formulation of the middle layer is as follows: 20 to 25 parts by mass of PVC resin powder, 70 to 80 parts by mass of stone powder, 6 to 10 parts by mass of plasticizer, 0.2 to 0.6 part by mass of stabilizer, 10 to 25 parts of flame retardant, 6 to 9 parts by mass of charring agent, 2 to 5 parts by mass of smoke suppressant, and 0.1 to 0.3 part by mass of carbon black.

A formulation of the bottom layer is as follows: 40 to 60 parts by mass of PVC resin powder, 20 to 40 parts by mass of stone powder, 10 to 15 parts by mass of plasticizer, 0.2 to 0.6 part by mass of stabilizer, 10 to 25 parts by mass of flame retardant, 6 to 9 parts by mass of charring agent, 2 to 5 parts by mass of smoke suppressant, and 0.1 to 0.3 part by mass of carbon black.

In the formulations of the middle layer and the bottom layer, the PVC resin powder, the stone powder, the plasticizer, the stabilizer and the carbon black are base materials for preparing the PVC floor. The PVC floor can be prepared by the PVC resin powder, the stone powder, the plasticizer, the stabilizer and the carbon black, and the flame retardant, the charring agent and the smoke suppressant can add effect of flame retardant and less smoke to the floor.

In preparing, too much PVC resin powder may cause the floor to be with insufficient hardness and too soft. Too much stone powder may cause the floor to be too hard and not tough enough.

The carbon black is configured to color and can improve stability of products. The stabilizer can alleviate thermal decomposition of PVC. The plasticizer also functions in lubrication while plasticizing and molding PVC, and also provides toughening effect. The plasticizer has high plasticizing efficiency.

The plasticizer is any one of bio-based plasticizer or DOTP, for improving flexibility and machinability of the floor, improving heat resistance and cold resistance of the floor while adjusting hardness and strength of the material.

The plasticizer can be replaced by a flame retardant plasticizer, but the flame retardant plasticizer is expensive and with poor plasticizing effect, and thus the plasticizer should be selected as needed.

The stabilizer is any one of calcium-zinc stabilizer or rare earth stabilizer, which can improve stability of the floor, keep chemical and physical properties of the floor stable for a long time, and prevent photo-thermal decomposition or oxidative decomposition.

The flame retardant is any one of aluminum hydroxide or magnesium hydroxide, which improves a fire safety level of the floor, makes it nonflammable, slows down spread of fire, and reduces smoke concentration and toxicity when the materials burns.

The charring agent is any one of phosphate-based charring agent, boron-based charring agent or silicon-based charring agent, which enables the floor to have a charring function under action of high temperature or flame, and reduces combustion and smoke release.

The smoke suppressant is one of molybdenum-based smoke suppressant, ammonium octamolybdate or molybdenum trioxide or triamine octamolybdate, which reduces release of smoke and toxic gases when the floor is burning.

The UV layer is a protective layer, which is prepared by coating transparent varnish and forms an integral protection for the plate.

A main function of the PETG flame-retardant and wear-resistant layer is to increase wear resistance, protect the plate for a long time and maintain the plate in a qualified use state for a long time.

The PETG color film layer is mainly used to beautify the plate, and patterns on the plate are presented by the color film layer.

The PVC middle layer and the PVC bottom layer are a main supporting structure and a main body of the plate.

An overall thickness of a product composed of the UV layer, the PETG flame-retardant and wear-resistant layer, the PETG color film layer, the PVC middle layer and the PVC bottom layer is 2.0 to 3.0 mm. A thickness of the PETG flame-retardant and wear-resistant layer is 0.07 to 0.5 mm. The PETG color film is non-flame retardant and has a thickness of 0.07 to 0.1 mm. A thickness of the PVC middle layer is 0.7 to 2.2 mm. A thickness of the PVC bottom layer is 0.7 to 1.1 mm.

Because the marine vessel is of a relatively closed and narrow space, all of its floors must meet Marine Equipment Directive (MED) certification, that is, they should pass the test for surface flammability (IMO FTPC Part 5 Test for surface flammability) and the smoke toxicity test (IMO FTPC Part2 Smoke and toxicity test), so as to be used on the marine vessel.

With above combination and formulation optimization, the product has enough flame retardancy, low smoke and low toxicity after combustion, and can pass the requirements of MED certification.

A processing method of the marine plastic floor is provided, with a basic process is to produce middle and bottom materials respectively by a calendering process, then spread a wear-resistant layer, a color film, the middle and bottom materials together according to combination requirements and send them to an oil press, then carry out film coating and tempering after molding, and finally perform finishing and packaging. The processing method includes following steps:
S01, mixing materials;
S02, calendering the materials to prepare a middle layer and a bottom layer;
S03, oil pressing the PETG flame-retardant and wear-resistant layer, the PETG color film layer, the PVC middle layer and the PVC bottom layer to be integrally formed;
S04, coating and tempering to form a UV layer;
S05, performing finishing; and
S06, packaging.

In the step S01, the materials used to make the PVC middle layer and the PVC bottom layer are combined according to an optimized formulation. The PETG flame-retardant and wear-resistant layer and the PETG color film layer can be directly purchased for use. The UV layer is fixed on the PETG flame-retardant and wear-resistant layer in a coating manner after preparation and pressing of the PETG flame-retardant and wear-resistant layer, the PETG color film layer, the PVC middle layer and the PVC bottom layer.

In the step S02, the materials of the prepared PVC middle layer and PVC bottom layer are placed into a pressing device, and the mixed materials are made into materials of the PVC middle layer and the PVC bottom layer by the pressing device at high temperature and high pressure, and the materials in the pressing device is with banburying time of 2 to 5 min and a temperature of a calendering roller of 160 to 180°C.

In the oil pressing in the step S03, the materials of the prepared PVC middle layer and PVC bottom layer as well as the PETG flame-retardant and wear-resistant layer and the PETG color film layer are laid in an order of the PETG flame-retardant and wear-resistant layer, the PETG color film layer, the PVC middle layer and the PVC bottom layer from top to bottom, and passed through the oil press to cause them to be an integral plate in which they are first integrally composited by hot pressing to form an integral structure, and then their integral shape is fixed by cold pressing. When the oil press carries out oil pressing on each layer of materials, a hot pressing pressure is 4 to 8 MPA and hot pressing time is 30 to 40 min, and a cold pressing pressure is 9 to 13 MPA and cold pressing time is 25 to 30 min.

The hot pressing and cold pressing are preferably performed by multiple oil pressings, and with gradual pressurizing and gradually increased pressing time, the plate is more integrated and stable.

In the above technical scheme, under a PVC plastic floor system and by adjusting the formulation and replacing the wear-resistant layer and the color film, both passing of MED certification and tests for smoke density, toxicity and surface flammability can be satisfied, and the passing of MED certification is a breakthrough in the PVC system.

### Example:

Material preparation: according to the optimized formulation, materials are selected as follows.

A formulation of the middle layer is as follows: 21 parts of PVC resin powder, 8 parts of plasticizer, 0.6 part of calcium-zinc stabilizer, 2 parts of 220-mesh stone powder, 15 parts of magnesium hydroxide, 7.5 parts of charring agent, 3 parts of smoke suppressant, and 0.15 part of carbon black.

A formulation of the bottom layer is as follows: 43 parts of PVC resin powder, 13 parts of plasticizer, 0.6 part of calcium-zinc stabilizer, 25 parts of 220-mesh stone powder, 25 parts of magnesium hydroxide, 15 parts of charring agent, 5 parts of smoke suppressant, and 0.3 part of carbon black.

The materials of the middle layer and the bottom layer are mixed respectively, so that the materials of respective components are evenly distributed.

Calendering: the mixed materials are placed into the pressing device, with banburying time in pressing of 4 min and a temperature of a calendering roller of 170°C.

Oil pressing:
a hot pressing temperature is 145°C; and a first stage of hot pressing is with a pressure of 4 MPA and time of 10 min, a second stage of hot pressing is with a pressure of 5 MPA and time of 12 min, and a third stage of hot pressing is with a pressure of 6 MPA and time of 15 min; and
a cold pressing temperature is 25°C; and a first stage of cold pressing is with a pressure of 9 MPA and time of 10 min, a second stage of cold pressing is with a pressure of 11 MPA and time of 8min, and a third stage of cold pressing is with a pressure of 13 MPA and time of 10 min.

For structure combination, a thickness of the PETG flame-retardant and wear-resistant layer is 0.5 mm, a thickness of the PETG wear-resistant layer is 0.07 mm, a thickness of the PVC middle layer is 0.7 mm, and a thickness of the PVC bottom layer is 0.8 mm.

Coating and tempering: the integrated plate is placed into a coating machine, and transparent varnish is coated on a surface of the integrated plate to further improve scratch resistance, stain resistance and wear resistance of the plate, and enhance performance of the plate surface. After the varnish is evenly coated, the plate is moved under a UV lamp to cure the varnish on its surface.

Then, the plate is cut, trimmed, polished and other finishing operations, and then packaged.

To test the prepared floor, some dry samples are randomly selected to test, and it is determined whether the optimized PVC floor meets use standards according to test results.

### Test results:

Maximum specific optical density is qualified, with a specific test as follows:

Test condition: the test is conducted at radiation of 50kw/m2 without flame.

| Sample Number | | 1 | 2 | Limit Value |
|---|---|---|---|---|
| Maximum specific optical density DS,max | | 358 | 350 | ***500*** |
| Specific optical density at fourth minute DS,4 | | 305 | 310 | - |
| Time to reach DS,max T(DS,max) | | 149s | 153s | - |
| | Ignition time | 29s | 23s | - |
| | Extinction time | 265s | 231s | |

Both smoke and toxicity tests are passed, with content of respective gases in the smoke not exceeding the standard and with specific test data as follows:

| Sample Number | 1 | Limit Value |
|---|---|---|
| CO₂, ppm | 14140 | - |
| CO, ppm | 612 | ***1450*** |
| NOₓ, ppm | ND | ***350*** |
| SO₂, ppm | ND | ***200*** |
| HF, ppm | ND | ***600*** |
| HCl, ppm | 417 | ***600*** |
| HBr, ppm | ND | ***600*** |
| HCN, ppm | 2 | ***140*** |

| | | |
|---|---|---|
| **Remark:** ND- Not Detected | | |

A flame spread test is passed, with specific test data as follows:

| Sample Number | 1 | 2 |
|---|---|---|
| Critical heat flux when the flame is extinguished (CFE), kW/m² | 13.2 | 10.8 |
| Continuous combustion heat (Q_{sb}), MJ/m² | 1.8 | 1.8 |
| Total heat release (Qₜ), MJ | 0.7 | 0.8 |
| Peak heat release rate(Qₚ), kW | 6.7 | 5.0 |
| Largest distance for flame spread, mm | 450 | 480 |
| Flaming drips | Not generated | Not generated |

in which standard requirements for the flame spread test are:
critical heat flux (CFE) when the flame is extinguished larger than or equal to 7.0 kW/m2;
continuous combustion heat (Q_{sb}) larger than or equal to 0.25 mJ/m2;
total heat release (Qt) less than or equal to 2.0 MJ;
peak heat release rate (Q_{P}) less than or equal to 10 kW;

In the above tests, standard values of the tests that are not clearly defined mean that there is no standard for a test result of the item.

The present disclosure and embodiments thereof are described above in an illustrative manner, which is not restrictive; and what is shown in the drawings is only one of the embodiments of the present disclosure, and its actual structure is not limited thereto. Therefore, structures and embodiments similar to the technical scheme designed by those of ordinary skilled in the art inspired by this disclosure without creativity, without departing from the creative purpose of the present disclosure, are all within a protection scope of the present disclosure.

## Claims

1. A marine plastic floor, comprising a UV layer, a PETG flame-retardant and wear-resistant layer, a PETG color film layer, a PVC middle layer and a PVC bottom layer from top to bottom; wherein
a formulation of the PVC middle layer in parts by mass is as follows: 20 to 25 parts of PVC resin powder, 70 to 80 parts of stone powder, 6 to 10 parts of plasticizer, 0.2 to 0.6 part of stabilizer, 10 to 25 parts of flame retardant, 6 to 9 parts of charring agent, 2 to 5 parts of smoke suppressant, and 0.1 to 0.3 part of carbon black; and
a formulation of the PVC bottom layer in parts by mass is as follows: 40 to 60 parts of PVC resin powder, 20 to 40 parts of stone powder, 10 to 15 parts of plasticizer, 0.2 to 0.6 part of stabilizer, 10 to 25 parts of flame retardant, 6 to 9 parts of charring agent, 2 to 5 parts of smoke suppressant, and 0.1 to 0.3 part of carbon black.

2. The marine plastic floor according to claim 1, wherein
the plasticizer is any one of bio-based plasticizer or DOTP.

3. The marine plastic floor according to claim 1, wherein the stabilizer is any one of calcium-zinc stabilizer or rare earth stabilizer.

4. The marine plastic floor according to claim 1, wherein the flame retardant is any one of aluminum hydroxide or magnesium hydroxide.

5. The marine plastic floor according to claim 1, wherein
the charring agent is any one of phosphate-based charring agent, boron-based charring agent or silicon-based charring agent.

6. The marine plastic floor according to claim 1, wherein
the smoke suppressant is one of molybdenum-based smoke suppressant, ammonium octamolybdate or molybdenum trioxide or triamine octamolybdate.

7. The marine plastic floor according to claim 1, wherein an overall thickness of the floor is 2.0 to 3.0 mm;
a thickness of the PETG flame-retardant and wear-resistant layer is 0.07 to 0.5 mm;
the PETG color film layer is non-flame-retardant, with a thickness of 0.07 to 0.1 mm;
a thickness of the PVC middle layer is 0.7 to 2.2 mm; and
a thickness of the PVC bottom layer is 0.7 to 1.1 mm.

8. A processing method of the marine plastic floor according to any of claims 1 to 7, comprising following steps:
S01, mixing materials;
S02, calendering the materials to prepare a middle layer and a bottom layer;
S03, oil pressing the PETG flame-retardant and wear-resistant layer, the PETG color film layer, the PVC middle layer and the PVC bottom layer to be integrally formed;
S04, coating and tempering to form a UV layer;
S05, performing finishing; and
S06, packaging.

9. The processing method of the marine plastic floor according to claim 8, wherein the calendering in the step S02 is with banburying time of 2 to 5 min and a temperature of a calendering roller of 160 to 180°C.

10. The processing method of the marine plastic floor according to claim 8, wherein the oil pressing in the step S03 is with a hot pressing pressure of 4 to 8 MPA and hot pressing time of 30 to 40min, and a cold pressing pressure of 9 to 13 MPA and cold pressing time of 25 to 30 min.
